(19) Europäisches Patentamt / European Patent Office / Office européen des brevets

(11) **EP 2 105 341 B1**

(12) **EUROPÄISCHE PATENTSCHRIFT**

(45) Veröffentlichungstag und Bekanntmachung des Hinweises auf die Patenterteilung:
**15.10.2014 Patentblatt 2014/42**

(51) Int Cl.:
*B60L 3/00* *(2006.01)*      *B60L 3/04* *(2006.01)*
*B61L 1/20* *(2006.01)*

(21) Anmeldenummer: **09156161.3**

(22) Anmeldetag: **25.03.2009**

(54) **Energieversorgungseinrichtung für ein Fahrzeug**

Power supply device for a vehicle

Dispositif d'alimentation en énergie pour un véhicule

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **28.03.2008 DE 102008016328**

(43) Veröffentlichungstag der Anmeldung:
**30.09.2009 Patentblatt 2009/40**

(73) Patentinhaber: **Bombardier Transportation GmbH
10785 Berlin (DE)**

(72) Erfinder: **Steuerwald, Gerhard
68167 Mannheim (DE)**

(74) Vertreter: **Cohausz & Florack
Patent- und Rechtsanwälte
Partnerschaftsgesellschaft
Bleichstraße 14
40211 Düsseldorf (DE)**

(56) Entgegenhaltungen:
**EP-A- 0 917 979**      **EP-A- 1 187 293**
**DE-A1-102005 045 603**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Energieversorgungseinrichtung für ein Fahrzeug, insbesondere ein Schienenfahrzeug, mit einer Mehrzahl von Stromrichtereinheiten, einer Mehrzahl von Erfassungseinrichtungen und einer Steuereinrichtung, wobei jeder Stromrichtereinheit wenigstens eine der Erfassungseinrichtungen zugeordnet ist, die Erfassungseinrichtung zur Erfassung eines Erfassungswerts wenigstens einer Zustandsgröße ausgebildet ist, welche für die durch die Stromrichtereinheit erzeugten Störströme repräsentativ ist, und die Steuereinrichtung zum selektiven Deaktivieren der Stromrichtereinheiten ausgebildet ist. Die vorliegende Erfindung betrifft darüber hinaus ein Fahrzeug, insbesondere ein Schienenfahrzeug, mit einer erfindungsgemäßen Energieversorgungseinrichtung sowie ein Verfahren zur Steuerung einer Energieversorgungseinrichtung.

Im Personen- und Güterverkehr zu Lande, insbesondere im Schienenverkehr, ist es aus Sicherheitsgründen erforderlich, Beeinflussungen von den Verkehr regelnden bzw. Signalanlagen oder anderen den Verkehr beeinflussenden Einrichtungen im Umfeld der befahrenen Strecken zu vermeiden. Insbesondere bei überwiegend elektrisch betriebenen derartigen Anlagen oder Einrichtungen können eingekoppelte Störströme (beispielsweise fahrzeugseitige Schienenrückströme), die in den elektrischen Energieversorgungseinrichtungen der genutzten Fahrzeuge erzeugt werden, zu unerwünschten Störungen führen.

Die für den Antrieb eines Fahrzeugs erforderlichen Traktionsstromrichter und die für die Versorgung von Hilfseinrichtungen des Fahrzeugs verwendeten Bordnetzumrichter weisen daher in der Regel entsprechende Eingangsfilter auf, um die Störströme in bestimmten relevanten Frequenzbereichen unterhalb eines zulässigen Grenzwertes zu halten. Weiterhin ist es in diesem Zusammenhang bekannt, andere Maßnahmen zu ergreifen, wie beispielsweise eine Antiregelung (geeignet versetzte Taktung der Stromrichter) oder die Wahl einer von der Betriebsfrequenz der zu schützenden Signalkreise etc. abweichenden Betriebsfrequenz.

Dennoch können in der Praxis unter anderem durch Fehler in der Steuerung des Fahrzeugs unzulässig hohe Störströme erzeugt werden. Beispiele für solche Fehler sind Asymmetrien im Motorkreis oder in der Ansteuerung sowie Fehler (beispielsweise Offset-Fehler) in der Sensorik etc.

Um eine unerwünschte Beeinflussung der Signalanlagen oder anderer sensitiver Einrichtungen zu verhindern, ist bei einer Reihe von Schienenfahrzeugen im Fahrzeug eine zentrale Überwachungsvorrichtung vorgesehen, welche die durch die Traktionseinrichtungen des Fahrzeugs erzeugten Störströme auf eine unzulässige Überschreitung eines vorgegebenen Grenzwertes hin überwacht. Wird eine Überschreitung detektiert, so erfolgt bei diesen Fahrzeugen eine Abschaltung des gesamten Antriebs. Ein massiver Nachteil dieser Lösung liegt darin, dass in diesem Fall eine Weiterfahrt unmöglich ist, auch wenn lediglich ein Stromrichter der Traktionseinrichtungen für den Fehler verantwortlich ist. Insbesondere in Situationen, in denen eine Weiterfahrt des Fahrzeugs im Interesse der Sicherheit der Passagiere vonnöten wäre (beispielsweise Überhitzung eines Stromrichters mit daraus resultierender Brandgefahr während des Befahrens eines Tunnels), kann dies zu kritischen Situationen führen.

Aus der DE 10 2005 045 603 A1 ist eine gattungsgemäße Energieversorgungseinrichtung eines Schienenfahrzeugs bekannt, bei welcher für die einzelnen Antriebseinheiten jeweils der erzeugte Störstrom erfasst wird und dezentral in der jeweiligen Steuereinheit der Antriebseinheit mit einem Grenzwert verglichen wird. Der Grenzwert für die Störströme wird für jede Antriebseinheit laufend in Abhängigkeit von der Anzahl der aktivierten Antriebseinheiten des Fahrzeugs berechnet. Hierdurch soll erreicht werden, dass auf das gesamte Fahrzeug gesehen ein maximales Störstromniveau nicht überschritten wird. Wird in der Steuereinheit der jeweiligen Antriebseinheit eine Überschreitung dieses Grenzwerts detektiert, so wird die jeweilige Antriebseinheit abgeschaltet.

Diese Konfiguration weist jedoch ebenfalls eine Reihe von Nachteilen auf. So wird zum einen ständig in die fundamentalen Größen (nämlich den der Überwachung zu Grunde liegenden Grenzwert) der dezentralen Überwachungseinrichtungen eingegriffen, was unter Sicherheitsaspekten kritisch ist und daher zu einem erhöhten Sicherungsaufwand führt. Dies gilt insbesondere, wenn wie üblich die Kommunikation der für diesen Eingriff verwendeten Daten über einen Datenbus des Schienenfahrzeugs erfolgt.

Ein weiteres Problem der Grenzwertbestimmung in Abhängigkeit von der Anzahl der aktivierten Antriebseinheiten besteht darin, dass bereits eine leichte Überschreitung dieses Grenzwerts zu einer Deaktivierung der betreffenden Antriebseinheit führt, obwohl der in Summe von dem Fahrzeug erzeugte Störstrom noch (gegebenenfalls sogar deutlich) im tolerablen Bereich liegt.

Der vorliegenden Anmeldung liegt daher die Aufgabe zu Grunde, eine Energieversorgungseinrichtung bzw. ein Verfahren zur Steuerung einer Energieversorgungseinrichtung zur Verfügung zu stellen, welche bzw. welches die oben genannten Nachteile nicht oder zumindest in geringerem Maße aufweist und welche insbesondere auf einfache Weise eine unnötige frühzeitige Abschaltung von Teilen der Energieversorgungseinrichtung vermeidet.

Die vorliegende Anmeldung löst diese Aufgabe ausgehend von einer Energieversorgungseinrichtung gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 10 durch die im kennzeichnenden Teil des Anspruchs 10 angegebenen Merkmale.

Der vorliegenden Erfindung liegt die technische Lehre zu Grunde, dass man auf einfache Weise eine unnötige frühzeitige Abschaltung einzelner Stromrichtereinheiten vermeiden kann, wenn eine Erfassung zur Überwachung der Störströme der einzelnen Stromrichtereinheiten vorgenommen wird, jedoch ein Summenwert aus den Erfassungswerten gebildet wird, um diesen Summenwert mit einem Grenzwert für den durch das gesamte Fahrzeug erzeugten Störstrom zu vergleichen. Wird bei diesem Vergleich einer Überschreitung des Grenzwerts (für einen entsprechend langen Zeitraum) festgestellt, können dann selektiv nur soviele der Stromrichtereinheiten deaktiviert werden, wie nötig ist, um zu erreichen, dass der Grenzwert wieder um einen (entsprechend vorgebbaren) ausreichenden Wert unterschritten wird. Hiermit ist es zum einen möglich, an Stelle einer globalen Deaktivierung eine selektive Deaktivierung nur so vieler Stromrichtereinheiten wie nötig vorzunehmen. Zum anderen ist es im Vergleich zu den bekannten Einrichtungen mit einer selektiven Deaktivierung in Abhängigkeit von einem für jede Stromrichtereinheit vorgegebenen Grenzwert in vorteilhafter Weise möglich, gegebenenfalls große Störströme einzelner Stromrichtereinheiten zuzulassen, solange der Gesamtstörstrom des Fahrzeugs in einen zulässigen Bereich liegt. Eine unnötig frühzeitige Deaktivierung einzelner Stromrichtereinheiten kann somit vermieden werden. In jedem Fall ist es also mit der vorliegenden Erfindung in vorteilhafter Weise möglich, einzelne (mehr oder weniger) defekte Stromrichtereinheiten zuverlässig zu identifizieren und (falls nötig) selektiv zu deaktivieren.

Gemäß einem ersten Aspekt betrifft die vorliegende Erfindung daher eine Energieversorgungseinrichtung für ein Fahrzeug, insbesondere ein Schienenfahrzeug, mit einer Mehrzahl von Stromrichtereinheiten, einer Mehrzahl von Erfassungseinrichtungen und einer Steuereinrichtung. Jeder Stromrichtereinheit ist wenigstens eine der Erfassungseinrichtungen zugeordnet. Die Erfassungseinrichtung ist zur Erfassung eines Erfassungswerts wenigstens einer Zustandsgröße ausgebildet, welche für die durch die Stromrichtereinheit erzeugten Störströme repräsentativ ist. Die Steuereinrichtung ist weiterhin zum selektiven Deaktivieren der Stromrichtereinheiten ausgebildet ist, wobei die Steuereinrichtung mit den Stromrichtereinheiten und den Erfassungseinrichtungen verbunden ist. Die Steuereinrichtung ist dazu ausgebildet, in einem Vergleichsschritt aus den Erfassungswerten der Erfassungseinrichtungen einen für die Summe der Störströme der Stromrichtereinheiten repräsentativen Summenwert zu bilden und diesen Summenwert mit einem vorgebbaren Grenzwert zu vergleichen. Schließlich ist die Steuereinrichtung dazu ausgebildet, bei Überschreitung des Grenzwerts über einen vorgebbaren Zeitraum in wenigstens einem Deaktivierungsschritt nur so viele der Stromrichtereinheiten zu deaktivieren, wie zur Unterschreitung des Grenzwerts um einen vorgebbaren Unterschreitungsbetrag erforderlich ist.

Es versteht sich hierbei, dass gegebenenfalls eine dezentrale Konfiguration der Steuereinrichtung mit mehreren Steuereinheiten vorgesehen sein kann. Diese dezentralen Steuereinheiten können untereinander vernetzt sein, um in einfacher Weise ein koordiniertes selektives Deaktivieren der Stromrichtereinheiten zu erreichen. Vorzugsweise ist jedoch eine zentrale Steuereinheit vorgesehen, welche die beschriebenen Funktionen der Steuereinrichtung zur Verfügung stellt.

Der Unterschreitungsbetrag kann grundsätzlich auf beliebige geeignete Weise festgelegt werden. So kann er beispielsweise auf einen bestimmten Absolutbetrag oder einen bestimmten prozentualen Anteil des Grenzwerts festgelegt werden. Hierbei ist es je nach Wahl des Grenzwerts insbesondere möglich, auch einen Unterschreitungsbetrag von 0 bzw. 0% festzulegen. Vorzugsweise ist daher vorgesehen, dass der Unterschreitungsbetrag 0% bis 50% des Grenzwertes, weiter vorzugsweise 20% bis 30% des Grenzwertes, beträgt.

Die Festlegung, welche der Stromrichtereinheiten in dem Deaktivierungsschritt deaktiviert wird bzw. werden, kann grundsätzlich auf beliebige geeignete Weise erfolgen. Insbesondere ist es möglich, eine die zu deaktivierende(n) Stromrichtereinheit(en) nach einem Zufallsprinzip auszuwählen. Vorzugsweise erfolgt die Festlegung jedoch anhand der zuvor erfassten Erfassungswerte, da hiermit bereits zumindest eine Abschätzung hinsichtlich der zu erwartenden Auswirkung der Deaktivierung auf den Gesamtstörstrom möglich ist. Vorzugsweise ist die Steuereinrichtung daher dazu ausgebildet, in dem wenigstens einen Deaktivierungsschritt unter Verwendung der Erfassungswerte der Erfassungseinrichtungen und wenigstens eines vorgebbaren Entscheidungskriteriums eine zu deaktivierende Stromrichtereinheit zu bestimmen, und die so ermittelte zu deaktivierende Stromrichtereinheit zu deaktivieren.

Als Entscheidungskriterium kann grundsätzlich ein beliebiges geeignetes Kriterium verwendet werden, anhand dessen festgelegt werden kann, welche der Stromrichtereinheiten zu deaktivieren ist. Hierbei können zusätzlich oder alternativ zu dem Störstrom auch andere Aspekte berücksichtigt werden, welche einen Einfluss auf den Zustand oder die Betriebssituation des Fahrzeugs haben. So kann beispielsweise in bestimmten Betriebssituationen, in denen einer bestimmten Funktion des Fahrzeugs eine hohe Priorität zukommt, vorgesehen sein, dass zunächst nur diejenigen Stromrichtereinheiten abgeschaltet werden, welche für die Erfüllung dieser Funktion nicht benötigt werden.

Ein Beispiel hierfür ist die Traktion beim Durchfahren von Streckenabschnitten (Tunnel, Brücken etc.), auf denen ein gefahrloses Aussteigen der Passagiere nicht gewährleistet ist. In einer solchen Betriebssituation können zunächst eine oder mehrere Stromrichtereinheiten für nicht zwingend benötigte Hilfsbetriebe des Fahrzeugs deaktiviert werden, um eine Unterschreitung des Grenzwerts zu erzielen, bevor eine Deaktivierung von Traktionsstromrichtern erfolgt (um zunächst sicherzustellen, dass dieser in Notsituationen ungünstige Streckenabschnitt schnellstmöglich verlassen wird). Dies kann selbst dann der Fall sein, wenn die Überschreitung des Grenzwerts eindeutig auf einen hohen Störstrom aus einem oder mehreren der Traktionsstromrichter des Fahrzeugs zurückzuführen ist.

Bei Berücksichtigung der Störströme als Entscheidungskriterium ist vorzugsweise vorgesehen, dass die Steuereinrichtung in dem wenigstens einen Deaktivierungsschritt zumindest die Stromrichtereinheit mit dem höchsten Störstrom deaktiviert.

In dem Deaktivierungsschritt können grundsätzlich (sofern erforderlich) mehrere Stromrichtereinheiten deaktiviert werden. Bei anderen Varianten der Erfindung kann jedoch auch vorgesehen sein, dass zunächst nur eine Stromrichtereinheit abgeschaltet wird und dann der Vergleichsschritt und der Deaktivierungsschritt einmalig oder mehrfach wiederholt werden, um (sofern noch erforderlich) weitere Stromrichtereinheiten zu deaktivieren.

Die Stromrichtereinheit kann grundsätzlich in beliebiger geeignete Weise aufgebaut sein. Vorzugsweise umfasst die Stromrichtereinheit zumindest einen Stromrichter. Hierbei kann es vorgesehen sein, dass die Stromrichtereinheit mehrere Stromrichter umfasst, sodass mit ihrer Deaktivierung gleichzeitig alle Stromrichter der Stromrichtereinheit deaktiviert werden. Vorzugsweise ist jedoch vorgesehen, dass die jeweilige Stromrichtereinheit genau einen Stromrichter umfasst, sodass eine besonders feine Einstellung bzw. Abstimmung des Gesamtstörstroms des Fahrzeugs möglich ist. Dies ist insbesondere bei besonders sensitiven (vor den Störströmen zu schützenden) Einrichtungen im Umfeld des Fahrzeugs, mithin also bei einem niedrigen Grenzwert von Vorteil.

Der Stromrichter kann grundsätzlich zu beliebigen Zwecken dienen. Vorzugsweise ist der Stromrichter ein Traktionsumrichter oder ein Bordnetzumrichter (für Hilfseinrichtungen wie Licht, Klimaanlage etc.), da diese in der Regel entsprechend hohe Störströme erzeugen können.

Der vorgebbare Grenzwert kann ein fest vorgegebener Grenzwert sein. Ebenso ist es aber auch möglich, dass der Grenzwert (in Abhängigkeit von einem oder mehreren vorgebbaren Kriterien) variiert. Dies kann insbesondere dann von Vorteil sein, wenn externe Einflüsse wie beispielsweise netzseitige Störströme (aus einem die Energieversorgungseinrichtung speisenden Netz) oder andere äußere Einflüsse (beispielsweise witterungsbedingte Einflüsse wie Lichtbogeneffekte durch Raureif etc.) berücksichtigt werden sollen. Weiterhin kann der vorgebbare Grenzwert grundsätzlich von beliebiger geeigneter Art sein. Vorzugsweise ist der vorgebbare Grenzwert ein Amplitudengrenzwert.

Die Verbindung zwischen der Steuereinrichtung und den Stromrichtereinheiten sowie den Erfassungseinrichtungen kann grundsätzlich auf beliebige geeignete Weise gestaltet sein. Beispielsweise kann zumindest abschnittsweise eine feste direkte Verschaltung (beispielsweise eine feste Verdrahtung) zwischen diesen Komponenten vorgesehen sein. Vorzugsweise wird jedoch wenigstens ein in der Regel ohnehin vorhandenes Datenbussystem für die Verbindung und Kommunikation zwischen der Steuereinrichtung und den Stromrichtereinheiten und/oder den Erfassungseinrichtungen genutzt.

Die Zeitspanne, innerhalb derer eine temporäre Überschreitung des Grenzwerts toleriert wird, kann grundsätzlich beliebig groß gewählt sein, solange sichergestellt ist, dass es nicht zu einer unerwünscht hohen Beeinträchtigung anderer Einrichtungen durch die Störströme kommt. Vorzugsweise hängt die Zeitspanne (kontinuierlich oder in diskreten Schritten) von dem Grad der Überschreitung des Grenzwerts ab. So kann eine geringfügige Überschreitung des Grenzwerts über einen vergleichsweise langen Zeitraum toleriert werden, während ab einem bestimmten Maß der Überschreitung des Grenzwerts gegebenenfalls eine sofortige Reaktion (mithin also eine Deaktivierung einer oder mehrerer Stromrichtereinheiten) erfolgt. Vorzugsweise beträgt die vorgebbare Zeitspanne 0,1 s bis 2 s , insbesondere 0,2 s bis 1 s.

Grundsätzlich kann vorgesehen sein, dass die Deaktivierung der jeweiligen Stromrichtereinheit für den aktuellen Betriebszyklus des Fahrzeugs endgültig ist, die Stromrichtereinheit mithin also erst wieder in einem neuen Betriebszyklus (beispielsweise nach einer entsprechenden Wartung) aktiviert werden kann. Bei bevorzugten Varianten der erfindungsgemäßen Energieversorgungseinrichtung ist jedoch vorgesehen, dass die Steuereinrichtung nach einer gewissen Wartezeit versucht, eine deaktivierte Stromrichtereinheit wieder zu reaktivieren. Vorzugsweise ist die Steuereinrichtung daher dazu ausgebildet, eine in dem wenigstens einen Deaktivierungsschritt deaktivierte Stromrichtereinheit nach einer weiteren vorgebbaren Zeitspanne in einem Reaktivierungsschritt zu reaktivieren.

Wird die reaktivierte Stromrichtereinheit erneut aufgrund eines zu hohen Gesamtstörstroms deaktiviert, so kann dieser Vorgang der Reaktivierung für eine vorgegebene Anzahl von Versuchen wiederholt werden. Ist diese vorgegebene Anzahl ausgeschöpft, wird die Stromrichtereinheit für den aktuellen Betriebszyklus endgültig deaktiviert. Vorzugsweise ist daher vorgesehen, dass die Steuereinrichtung für eine Stromrichtereinheit nach einer erneuten Deaktivierung der Stromrichtereinheit eine vorgebbare Anzahl von maximal N weiteren Reaktivierungsschritten vornimmt. Vorzugsweise beträgt die Anzahl der Versuche N 1 bis 5 beträgt.

Die Erfassung der für die Störströme der jeweiligen Stromrichtereinheit repräsentativen Zustandsgröße kann grundsätzlich auf beliebige geeignete Weise erfolgen. So kann beispielsweise vorgesehen sein, dass wenigstens eine Erfassungseinrichtung eine Sensoreinrichtung zur Messung eines für den Störstrom der zugeordneten Stromrichtereinheit repräsentativen Messwerts ist.

Zusätzlich oder alternativ kann aber auch vorgesehen sein, dass wenigstens eine Erfassungseinrichtung ein Modell zur Ermittlung eines für den Störstrom der zugeordneten Stromrichtereinheit repräsentativen Werts aus wenigstens einer Zustandsgröße der Stromrichtereinheit umfasst. Mit anderen Worten kann auf eine Messung von unmittelbar mit dem Störstrom zusammenhängenden Zustandsgrößen des Fahrzeugs verzichtet werden, sondern aus einem (zuvor

**4**

empirisch und/oder theoretisch) Modell der Stromrichtereinheit anhand von anderen Zustandsgrößen der Stromrichtereinheit (mit ausreichender Genauigkeit) auf den aktuell erzeugten Störstrom geschlossen werden. Das Modell gibt mithin also den Zusammenhang zwischen den betreffenden Zustandsgrößen der Stromrichtereinheit und dem erzeugten Störstrom wieder. Eine solche modellbasierte Regelung hat den Vorteil, dass gegebenenfalls keine zusätzliche Messtechnik erforderlich ist, sondern vielmehr einfach ohnehin bekannte Zustandsgrößen der Stromrichtereinheit verwendet werden können.

Die vorliegende Erfindung betrifft weiterhin ein Fahrzeug, insbesondere Schienenfahrzeug, mit einer erfindungsgemäßen Energieversorgungseinrichtung sowie ein Verfahren zur Steuerung einer Energieversorgungseinrichtung, insbesondere einer Energieversorgungseinrichtung für ein Fahrzeug, mit einer Mehrzahl von Stromrichtereinheiten, bei dem für jede Stromrichtereinheit Erfassungswerte erfasst werden, die für die von der Stromrichtereinheit erzeugten Störströme repräsentativ sind, und wenigstens eine der Stromrichtereinheiten zur Reduktion der von der Energieversorgungseinrichtung erzeugten Störströme selektiv deaktiviert wird. In einem Vergleichsschritt wird aus den Erfassungswerten ein für die Summe der Störströme der Stromrichtereinheiten repräsentativer Summenwert gebildet und mit einem vorgebbaren Grenzwert verglichen. Bei Überschreitung des Grenzwerts über einen vorgebbaren Zeitraum werden in wenigstens einem Deaktivierungsschritt nur so viele der Stromrichtereinheiten deaktiviert, wie zur Unterschreitung des Grenzwerts um einen vorgebbaren Unterschreitungsbetrag erforderlich ist. Mit diesem Fahrzeug bzw. diesem Verfahren lassen sich die oben beschriebenen Vorteile und Varianten in demselben Maße realisieren, sodass hier zur Vermeidung von Wiederholungen lediglich auf die obigen Ausführungen Bezug genommen wird.

Es sei an dieser Stelle nochmals erwähnt, dass die erfindungsgemäße Energieversorgungseinrichtung bzw. das erfindungsgemäße Verfahren in beliebigen Straßen- oder Schienenfahrzeugen eingesetzt werden kann, bei denen eine unerwünschte Beeinflussung von Einrichtungen im Fahrzeug selbst oder im Umfeld des Fahrzeugs durch Störströme möglich ist, die von Stromrichtereinheiten des Fahrzeugs erzeugt werden. Weiterhin ist zu erwähnen, dass als Steuereinrichtung eine digitale Prozesseinheit, wie beispielsweise ein digitaler Signalprozessor (DSP) oder dergleichen verwendet werden kann.

Um die erfassten Störströme geeignet auszuwerten, kann die Steuereinrichtung eine Filtereinrichtung umfassen, die für die Verarbeitung von Störströmen in einem oder mehreren vorgebbaren Frequenzbereichen ausgebildet ist. So hat sich gezeigt, dass Störströme in bestimmten Frequenzbereichen eine besonders starke Beeinträchtigung anderer Einrichtungen, wie Signalanlagen etc., bewirken können. Um den Rechenaufwand bei der Auswertung der erfassten Zustandsgrößen zu reduzieren, kann vorgesehen sein, dass nur Signale in relevanten Frequenzbereichen erfasst bzw. verarbeitet werden.

Neben der Filterung kann natürlich bevorzugt auch eine Glättung der Signale vorgesehen sein. Ein geglättetes Signal weist den Vorteil auf, dass die Amplitude des Signals in einfacher Weise bestimmt werden kann. Insbesondere bei der Verwendung eines Amplitudengrenzwertes kann ein geglättetes Signal den weiteren Verarbeitungsaufwand der Auswertung reduzieren.

Die Steuereinrichtung kann eine Speichereinrichtung umfassen, in der die Verlaufs-Historie der Verarbeitung gespeichert wird. Die Verlaufs-Historie kann beliebige zur späteren Auswertung geeignete Daten umfassen, wie beispielsweise die erfassten Fehlermeldungen, durchgeführte Schaltvorgänge und ähnliche Vorgänge. Insbesondere können die Daten in der Fahrzeugdiagnose des Schienenfahrzeugs hinterlegt werden. Diese Daten können zum Beispiel für eine spätere Analyse der Fehlerursache ausgelesen und zur Beseitigung der Fehlerursache zu Rate gezogen werden.

weiterhin kann die erfindungsgemäße Energieversorgungseinrichtung eine Überwachungseinrichtung aufweisen, die zumindest die Eingangsfilterelemente zumindest einer Stromrichtereinheit überwacht. Weitere Fehlerursachen, wie nicht korrekt arbeitende Eingangsfilterelemente der Stromrichtereinheit, können hiermit zusätzlich erfasst werden. Somit kann eine umfangreiche Überwachung der Einrichtungen, die einen Störstrom verursachen können, gewährleistet werden.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigt:

Figur 1    eine schematische Darstellung eines bevorzugten Ausführungsbeispiels eines erfindungsgemäßen Schienenfahrzeugs mit einem bevorzugten Ausführungsbeispiel einer erfindungsgemäßen Energieversorgungseinrichtung ;

Figur 2    ein Ablaufdiagramm eines bevorzugten Ausführungsbeispiels eines erfindungsgemäßen Verfahrens, welches zur Steuerung der erfindungsgemäßen Energieversorgungseinrichtung aus Figur 1 verwendet werden kann.

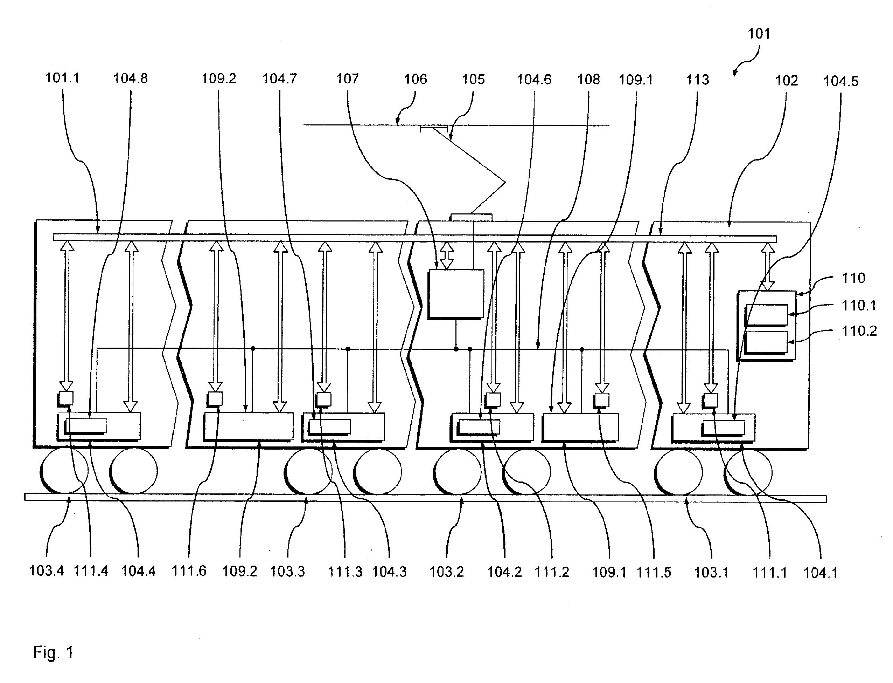

Figur 1 zeigt eine schematische Darstellung eines bevorzugten Ausführungsbeispiels eines erfindungsgemäßen Fahrzeugs in Form eines Schienenfahrzeugs 101 mit einem bevorzugten Ausführungsbeispiel einer erfindungsgemäßen Energieversorgungseinrichtung 102. Das Fahrzeug 101 umfasst eine Mehrzahl von miteinander gekoppelten Wagen 101.1, die (eben gegebenenfalls neben einer Reihe von nicht angetriebenen Fahrwerken) auf einer Reihe von angetriebenen Fahrwerken 103.1 bis 103.4 abgestützt sind.

Jedem angetriebenen Fahrwerk 103.1 bis 103.4 ist eine Traktionseinrichtung 104.1 bis 104.4 der Energieversorgungseinrichtung 102 zugeordnet. Jede Traktionseinrichtung 104.1 bis 104.4 weist jeweils genau eine Stromrichtereinheit in Form eines Traktionsstromrichters 104.5 bis 104.8 auf. Die jeweilige Traktionssteuerung (nicht dargestellt) der Traktionseinrichtung 104.1 bis 104.4 steuert den jeweiligen Traktionsstromrichter 104.5 bis 104.8 für die jeweiligen (nicht dargestellten) Motoren des zugehörigen Fahrwerks 103.1 bis 103.4.

Die Energieversorgungseinrichtung 102 umfasst weiterhin einen Stromabnehmer 105 über den Energie aus einer Oberleitung 106 entnommen wird. Der Stromabnehmer 105 ist mit einer Einspeisungseinrichtung 107 der Energieversorgungseinrichtung 102 verbunden. Die Einspeisungseinrichtung 107 bereitet den Strom aus der Oberleitung 106 entsprechend auf, sodass die Energie innerhalb des Fahrzeugs 101 verteilt werden kann. Die Energieverteilung innerhalb des Fahrzeugs 101 erfolgt dabei über eine Zwischenkreiseinrichtung 108.

Über die Zwischenkreiseinrichtung 108 wird die Energie an die Traktionseinrichtungen 104.1 bis 104.4 sowie an die Hilfsenergieversorgung des Fahrzeugs 101 verteilt, die zwei Stromrichtereinheiten in Form von Bordnetzumrichtern 109.1 und 109.2 umfasst. Diese Bordnetzumrichter 109.1 und 109.2 stellen in hinlänglich bekannter Weise die Energie für Hilfsbetriebe (Lüfter, Kompressoren etc.) des Fahrzeugs 101 zur Verfügung, sodass hierauf nicht näher eingegangen werden soll.

Bei dem Stromabnehmer 105, der Einspeisungseinrichtung 107 und der Zwischenkreiseinrichtung 108 handelt es sich um beliebige Einrichtungen dieser Art, welche insbesondere (zumindest zum Teil) in Abhängigkeit vom Typ der Energieversorgung über die Oberleitung 106 (Gleichstrom oder Wechselstrom) unterschiedlich gestaltet sein können. Derartige Einrichtungen sind hinlänglich bekannt, sodass hierauf nicht näher eingegangen werden soll. Es sei lediglich erwähnt, dass bei einer Versorgung mit Wechselstrom der Einspeisungseinrichtung 107 in der Regel einen Transformator und einen als Gleichrichter betreibbaren Stromrichter (beispielsweise einen so genannten Vierquadrantensteller) umfasst, der Gleichstrom in die als Gleichspannungszwischenkreis gestaltete Zwischenkreiseinrichtung 108 einspeist. Die Traktionsstromrichter 104.5 bis 104.8 und die Bordnetzumrichter 109.1 und 109.2 wandeln diesen Gleichstrom dann wieder in einen entsprechenden Wechselstrom um, wie er für die Motoren der Traktionseinrichtungen bzw. Hilfsbetriebe benötigt wird.

Im vorliegenden Beispiel ist (nicht zuletzt aus Gründen der Übersichtlichkeit) ein Beispiel mit einer einkreisigen Gestaltung der Energieversorgungseinrichtung 102 dargestellt. Es versteht sich jedoch, dass bei anderen Varianten der Erfindung natürlich auch eine mehrkreisige Gestaltung vorgesehen sein kann. Insbesondere können aus Sicherheitsgründen mehrere separate Einspeisungseinrichtungen und zugehörige Zwischenkreiseinrichtungen vorgesehen sein, um im Falle eines Fehlers in einem Kreis noch mindestens einen weiteren funktionsfähigen Kreis zu Verfügung zu haben. So könnte beispielsweise vorgesehen sein, dass jeweils die Hälfte der Traktionseinrichtungen und der Bordnetzumrichter einen separaten Kreis zugeordnet ist.

Im Betrieb des Fahrzeugs 101 werden durch die getaktete Ansteuerung der Leistungshalbleiterbauteile der Traktionsstromrichter 104.5 bis 104.8 und der Bordnetzumrichter 109.1 und 109.2 Störströme bestimmter Frequenz und Amplitude erzeugt, welche über den Rad-Schiene-Kontakt und die Oberleitung 106 an die Umgebung des Fahrzeugs 101 abgegeben werden. Diese Störströme können unter anderem sicherheitsrelevanten Einrichtungen im Umfeld der Fahrstrecke, wie beispielsweise Signalanlagen oder dergleichen erheblich beeinträchtigen und so zu einem Sicherheitsrisiko führen.

Um derartige Sicherheitsrisiken zu vermeiden, sind in der Regel von dem Betreiber des befahrenen Streckennetzes Grenzwerte hinsichtlich Höhe, Dauer und Frequenz der zulässigen Störströme vorgegeben, welche ein Fahrzeug beim Befahren des Streckennetzes einhalten muss.

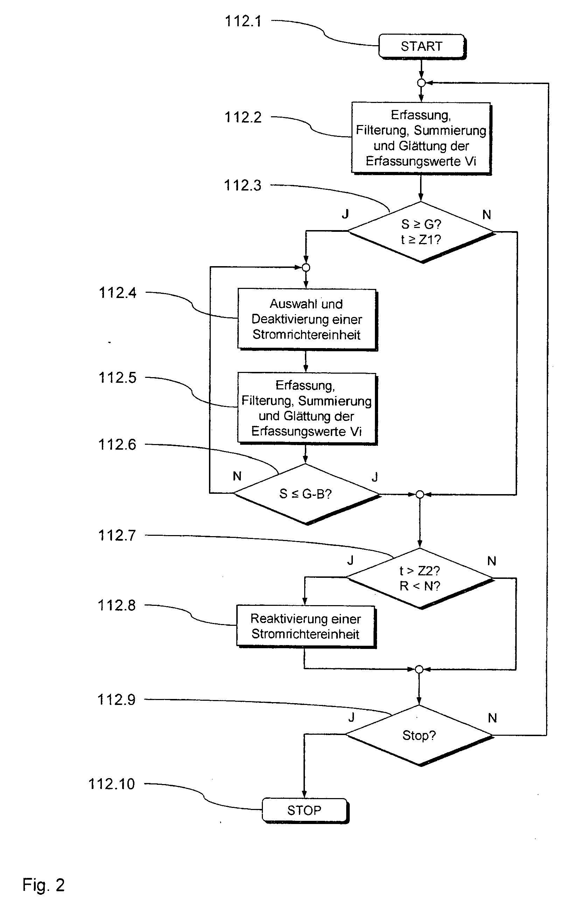

Die Energieversorgungseinrichtung 102 umfasst zu diesem Zweck eine Steuereinrichtung 110 und eine Reihe von Erfassungseinrichtungen 111.1 bis 111.6, deren Funktionsweise im Folgenden unter Bezugnahme auf die Figuren 1 und 2 näher erläutert wird.

Die Figur 2 zeigt dabei ein Ablaufdiagramm eines bevorzugten Ausführungsbeispiels des erfindungsgemäßen Verfahrens, welches zur Steuerung der Energieversorgungseinrichtung 102 verwendet wird, und in einem Schritt 112.1 gestartet wird.

Je eine der Erfassungseinrichtungen 111.1 bis 111.4 ist einem der Traktionsstromrichter 104.5 bis 104.8 zugeordnet, während die Erfassungseinrichtung 111.5 dem Bordnetzumrichter 109.1 und die Erfassungseinrichtung 111.6 dem Bordnetzumrichter 109.2 zugeordnet ist. Die Erfassungseinrichtungen 111.1 bis 111.6 erfassen in einem Schritt 112.2 jeweils einen Erfassungswert in Form der Amplitude einer Zustandsgröße V1 bis V6, die für die Amplitude des Störstroms einer bestimmten Frequenz F repräsentativ ist, der von der jeweils zugeordneten Stromrichtereinrichtung 104.5 bis 104.8, 109.1, 109.2 erzeugt wird. Im einfachsten Fall misst die Erfassungseinrichtung 111.1 bis 111.6 den Störstrom direkt. Es können bei anderen Varianten der Erfindung aber auch beliebige andere Zustandsgrößen erfasst werden, aus denen sich der erzeugte Störstrom ermitteln lässt.

Die Erfassungseinrichtungen 111.1 bis 111.6 sind über ein Datenbussystem 113 mit der Steuereinrichtung 110 verbunden und liefern die aktuell erfassten Werte V1 bis V6 in dem Schritt 112.2 kontinuierlich über das Datenbussystem 113 an die Steuereinrichtung 110.

Hierbei versteht es sich, dass die nach Gestaltung der Erfassungseinrichtungen 111.1 bis 111.6 die aktuell erfassten Werte V1 bis V6 das gesamte Frequenzspektrum der Störströme abbilden können und/oder bereits für diskrete Frequenzen der Frequenzbereiche erfasst sein können.

Da in der Regel nur bestimmte Frequenzbereiche für die negative Beeinflussung anderer Einrichtungen von Bedeutung sind, kann die Steuereinrichtung 110 in dem Schritt 112.2 eine Filterung der Erfassungswerte (beispielsweise über ein Digital-Filter mit einer Filterfrequenz von 50 Hz) vornehmen, um nur die relevanten Frequenzen der weiteren Verarbeitung zu berücksichtigen.

Nachfolgend wird vereinfachend davon ausgegangen, dass lediglich eine einzige Frequenz von Interesse ist und für das Vorgehen für diese Frequenz beschrieben. Es versteht sich jedoch, dass im Fall mehrerer relevanten Frequenzen die nachfolgend beschriebene Schritte parallel für die jeweiligen Frequenzen durchgeführt werden können.

Die Steuereinrichtung 110 bildet aus den Werten V1 bis V6 in dem Schritt 112.2 eine Summe S, für die gilt:

$$S = \sum_{i=1}^{6} Vi \ . \tag{1}$$

Hierbei kann die Steuereinrichtung 110 in dem Schritt 112.2 eine Glättung des Ergebnisses der Summierung vornehmen.

In einem Schritt 112.3 vergleicht die Steuereinrichtung 110 die Summe S mit einem Grenzwert G und ermittelt im Fall der Überschreitung des Grenzwerts G den Zeitraum t, für welchen diese Überschreitung des Grenzwerts G bereits vorliegt. Diesen Zeitraum t vergleicht die Steuereinrichtung 110 mit einer ersten Zeitspanne Z1, innerhalb derer eine temporäre Überschreitung des Grenzwerts G toleriert wird.

Die erste Zeitspanne Z1 ist so gewählt, dass es nicht zu einer unerwünscht hohen Beeinträchtigung anderer Einrichtungen durch die Störströme kommt. Vorzugsweise hängt die Zeitspanne (kontinuierlich oder in diskreten Schritten) von dem Grad der Überschreitung des Grenzwerts G ab. So kann eine geringfügige Überschreitung des Grenzwerts G über einen vergleichsweise langen Zeitraum toleriert werden, während ab einem bestimmten Maß der Überschreitung des Grenzwerts G gegebenenfalls eine sofortige Reaktion erfolgt. Vorzugsweise beträgt die vorgebbare erste Zeitspanne Z1 0,1 s bis 2 s , insbesondere 0,2 s bis 1 s.

Ist der Grenzwert G für einen längeren Zeitraum überschritten, als es durch die erste Zeitspanne Z1 vorgeben ist, erfolgt in einem Deaktivierungsschritt 112.4 die Deaktivierung einer der Stromrichtereinheiten 104.5 bis 104,8, 109.1 und 109.2. Hierzu sendet die Steuereinheit 110 ein entsprechendes Abschaltsignal an die betreffende Einheit der Stromrichtereinheiten 104.5 bis 104.8, 109.1 und 109.2, mit denen sie ebenfalls über das Datenbussystem 113 verbunden ist.

Die Festlegung, welche der Stromrichtereinheiten 104.5 bis 104.8, 109.1 und 109.2 in dem Deaktivierungsschritt deaktiviert wird, kann grundsätzlich auf beliebige geeignete Weise erfolgen. Insbesondere ist es möglich, die zu deaktivierende Stromrichtereinheit nach einem Zufallsprinzip auszuwählen. Vorzugsweise erfolgt die Festlegung jedoch anhand der zuvor erfassten Erfassungswerte V1 bis V6, da hiermit bereits zumindest eine Abschätzung hinsichtlich der zu erwartenden Auswirkung der Deaktivierung auf den Gesamtstörstrom möglich ist.

Vorzugsweise verwendet die Steuereinrichtung 110 ein vorgebbares Entscheidungskriterium, um die zu deaktivierende Stromrichtereinheit zu bestimmen. Als Entscheidungskriterium kann grundsätzlich ein beliebiges geeignetes Kriterium verwendet werden, anhand dessen festgelegt werden kann, welche der Stromrichtereinheiten 104.5 bis 104.8, 109.1 und 109.2 zu deaktivieren ist. Hierbei können zusätzlich oder alternativ zu dem Störstrom auch andere Aspekte berücksichtigt werden, welche einen Einfluss auf den Zustand oder die Betriebssituation des Fahrzeugs 101 haben. So kann beispielsweise in bestimmten Betriebssituationen, in denen einer bestimmten Funktion des Fahrzeugs 101 eine hohe Priorität zukommt, vorgesehen sein, dass zunächst nur diejenigen der Stromrichtereinheiten 104.5 bis 104.8, 109.1 und 109.2 abgeschaltet werden, welche für die Erfüllung dieser Funktion nicht benötigt werden.

Ein Beispiel hierfür ist die Traktion beim Durchfahren von Streckenabschnitten (Tunnel, Brücken etc.), auf denen ein gefahrloses Aussteigen der Passagiere nicht gewährleistet ist. In einer solchen Betriebssituation können zunächst die Bordnetzumrichter 109.1, 109.2 für die zum Weiterfahren nicht zwingend benötigten Hilfsbetriebe des Fahrzeugs 101 deaktiviert werden, um eine Unterschreitung des Grenzwerts G zu erzielen, bevor eine Deaktivierung von Traktionsstromrichtern 104.5 bis 104.8 erfolgt (um zunächst sicherzustellen, dass dieser in Notsituationen ungünstige Streckenabschnitt schnellstmöglich verlassen wird). Dies kann selbst dann der Fall sein, wenn die Überschreitung des Grenzwerts G eindeutig auf einen hohen Störstrom aus einem oder mehreren der Traktionsstromrichter 104.5 bis 104.8 zurückzuführen ist.

Im vorliegenden Beispiel werden neben dieser Priorisierung auch die Störströme als Entscheidungskriterium berücksichtigt, sodass unter den primär zu deaktivierenden Stromrichtereinheiten diejenige ausgewählt wird, die den höchsten Störstrom erzeugt. Es versteht sich jedoch, dass der anderen Varianten der Erfindung auch vorgesehen sein kann, dass die Entscheidung lediglich anhand der Störströme erfolgt, sodass stets zunächst die Stromrichtereinheit mit dem jeweils größten Störstrom deaktiviert wird.

In einem Schritt 112.5 werden dann erneut die aktuellen Werte V1 bis V6 der Zustandsgrößen ermittelt, gefiltert, summiert und geglättet. Hierbei wird wie zuvor in dem Schritt 112.2 vorgegangen, sodass hier lediglich auf die obigen Ausführungen verwiesen wird.

In einem Schritt 112.6 wird dann überprüft, ob die in dem Schritt 112.4 vorgenommene Deaktivierung der dort ausgewählten Stromrichtereinheit eine ausreichende Reduzierung der Störströme gebracht hat. Hierzu wird die in dem Schritt 112.5 ermittelte Summe S dahingehend überprüft, ob sie den Grenzwert G um einen vorgebbaren Unterschreitungsbetrag B unterschreitet. Mithin wird also überprüft, ob gilt:

$$S \leq G - B . \qquad (2)$$

Der Unterschreitungsbetrag B ist im vorliegenden Beispiel als prozentualer Anteil des Grenzwerts G festgelegt. Hierbei ist es je nach Wahl des Grenzwerts insbesondere möglich, auch einen Unterschreitungsbetrag von 0% festzulegen. Im vorliegenden Beispiel beträgt der Unterschreitungsbetrag 20% des Grenzwertes G.

Ist dies nicht der Fall, wird zurück zum Deaktivierungsschritt 112.4 gesprungen und eine weitere der Stromrichtereinheiten ausgewählt und deaktiviert. Die Schritte 112.4 bis 112.6 werden also gegebenenfalls solange wiederholt, bis die Überprüfung in dem Schritt 112.6 ein positives Ergebnis liefert.

Der Grenzwert G gibt dabei letztlich den zulässigen Wert für die gesamten von dem Fahrzeug 101 erzeugten Störströme wieder. Hierdurch wird bei dem erfindungsgemäßen Fahrzeug 101 eine unnötige frühzeitige Abschaltung einzelner Stromrichtereinheiten vermieden. Vielmehr können selektiv nur soviele der Stromrichtereinheiten deaktiviert werden, wie nötig ist, um zu erreichen, dass der Grenzwert wieder um einen (entsprechend vorgebbaren) ausreichenden Wert unterschritten wird. Hiermit wird also anstelle einer globalen Deaktivierung eine selektive Deaktivierung nur so vieler Stromrichtereinheiten wie nötig vorgenommen. Zum anderen ist es im Vergleich zu den bekannten Einrichtungen mit einer selektiven Deaktivierung in Abhängigkeit von einem für jede Stromrichtereinheit vorgegebenen Grenzwert in vorteilhafter Weise möglich, gegebenenfalls große Störströme einzelner Stromrichtereinheiten zuzulassen, solange der Gesamtstörstrom des Fahrzeugs 101 in einen zulässigen Bereich liegt. Eine unnötig frühzeitige Deaktivierung einzelner Stromrichtereinheiten kann somit vermieden werden.

Liefert die Überprüfung in dem Schritt 112.6 ein positives Ergebnis, wird in einem Schritt 112.7 für die aktuell deaktivierten Einheiten der Stromrichtereinheiten 104.5 bis 104.8, 109.1 und 109.2 jeweils überprüft, ob die Zeit seit ihrer letzten Deaktivierung eine zweite Zeitspanne Z2 erreicht hat. Weiterhin wird in dem Schritt 112.7 überprüft, ob die Anzahl R der bisherigen Reaktivierungen der betreffenden deaktivierten Einheit eine zulässige Anzahl N von Reaktivierungen unterschreitet.

Ist dies für eine aktuell deaktivierte Einheit der Stromrichtereinheiten 104.5 bis 104.8, 109.1 und 109.2 der Fall, wird die jeweilige Einheit in einem Schritt 112.8 wieder reaktiviert. Andernfalls bleibt diese Einheit vorerst (bei Nichterreichen der zweiten Zeitspanne Z2) bzw. dauerhaft (bei Ausschöpfung der zulässigen Anzahl N von Reaktivierungsversuchen) deaktiviert.

In einem Schritt 112.9 wird dann überprüft, ob der Verfahrensablauf beendet werden soll. Ist dies nicht der Fall, wird zu dem Schritt 112.2 zurück gesprungen. Andernfalls endet der Verfahrensablauf in einem Schritt 112.10.

Die Steuereinrichtung 110 weist neben einer zentralen Datenverarbeitungseinheit 110.1 (beispielsweise ein Mikroprozessor) einen damit verbundenen Speicher 110.2 auf, in dem sämtliche Programmmodule und Daten gespeichert sind, die zur Ausführung der oben beschriebenen Funktionen erforderlich sind. Zudem wird in dem Speicher 110.2 eine Historie der oben beschriebenen Vorgänge abgespeichert, sodass einem späteren Zeitpunkt eine vereinfachte Diagnose des Fahrzeugs 101 und damit ein schnelles Auffinden der Ursachen für die Deaktivierung einzelner Komponenten des Fahrzeugs 101 möglich ist.

Die vorliegende Erfindung wurde vorstehend ausschließlich anhand eines Beispiels eines Schienenfahrzeugs beschrieben. Es versteht sich jedoch, dass sich die vorliegende Erfindung auch auf beliebige andere Fahrzeuge anwenden lässt, bei denen eine entsprechende Emission von Störströmen zu erwarten ist.

**Patentansprüche**

1. Energieversorgungseinrichtung für ein Fahrzeug, insbesondere ein Schienenfahrzeug, mit

    - einer Mehrzahl von Stromrichtereinheiten (104.1 bis 104.4, 109.1, 109.2),
    - einer Mehrzahl von Erfassungseinrichtungen (111.1 bis 111.6),

- und einer Steuereinrichtung (110), wobei

- jeder Stromrichtereinheit (104.1 bis 104.4, 109.1, 109.2) wenigstens eine der Erfassungseinrichtungen (111.1 bis 111.6) zugeordnet ist,

- die Erfassungseinrichtung (111.1 bis 111.6) zur Erfassung eines Erfassungswerts wenigstens einer Zustandsgröße ausgebildet ist, welche für die durch die Stromrichtereinheit (104.1 bis 104.4, 109.1, 109.2) erzeugten Störströme repräsentativ ist, und

- die Steuereinrichtung (18) zum selektiven Deaktivieren der Stromrichtereinheiten (104.1 bis 104.4, 109.1, 109.2) ausgebildet ist, und

- die Steuereinrichtung (110) mit den Stromrichtereinheiten (104.1 bis 104.4, 109.1, 109.2) und den Erfassungseinrichtungen (111.1 bis 111.6) verbunden ist, **dadurch gekennzeichnet, dass**

- die Steuereinrichtung (110) dazu ausgebildet ist, in einem Vergleichsschritt (112.2, 112.3) aus den Erfassungswerten der Erfassungseinrichtungen (111.1 bis 111.6) einen für die Summe der Störströme der Stromrichtereinheiten (104.1 bis 104.4, 109.1, 109.2) repräsentativen Summenwert zu bilden und diesen Summenwert mit einem vorgebbaren Grenzwert zu vergleichen, und

- die Steuereinrichtung (110) dazu ausgebildet ist, bei Überschreitung des Grenzwerts über einen vorgebbaren Zeitraum in wenigstens einem Deaktivierungsschritt (112.4) nur so viele der Stromrichtereinheiten (104.1 bis 104.4, 109.1, 109.2) zu deaktivieren, wie zur Unterschreitung des Grenzwerts um einen vorgebbaren Unterschreitungsbetrag erforderlich ist, wobei

- der Unterschreitungsbetrag 0% bis 50% des Grenzwertes, vorzugsweise 20% bis 30% des Grenzwertes, beträgt, und

- die Bestimmung der in dem Deaktivierungsschritt (112.4) zu deaktivierenden Stromrichtereinheiten (104.1 bis 104.4, 109.1, 109.2) in Abhängigkeit von einer Funktion des Fahrzeugs erfolgt, die in der aktuellen Betriebssituation des Fahrzeugs mit Priorität zu realisieren ist.

2. Energieversorgungseinrichtung nach Anspruch 1, **dadurch gekennzeichnet, dass** die Steuereinrichtung (110) dazu ausgebildet ist, in dem wenigstens einen Deaktivierungsschritt (112.4)

- unter Verwendung der Erfassungswerte der Erfassungseinrichtungen (111.1 bis 111.6) und wenigstens eines vorgebbaren Entscheidungskriteriums eine zu deaktivierende Stromrichtereinheit (104.1 bis 104.4, 109.1, 109.2) zu bestimmen, und

- die zu deaktivierende Stromrichtereinheit (104.1 bis 104.4, 109.1, 109.2) zu deaktivieren, wobei

- die Steuereinrichtung (110) insbesondere dazu ausgebildet ist,

- in dem wenigstens einen Deaktivierungsschritt (112.4) zumindest die Stromrichtereinheit (104.1 bis 104.4, 109.1, 109.2) mit dem höchsten Störstrom zu deaktivieren, und/oder

- den Vergleichsschritt (112.2, 112.3) und den Deaktivierungsschritt (112.4) zu wiederholen.

3. Energieversorgungseinrichtung nach einem der vorhergehenden Ansprüche, **dadurch gekennzeichnet, dass**

- die Stromrichtereinheit (104.1 bis 104.4, 109.1, 109.2) zumindest einen Stromrichter (104.5 bis 104.8, 109.1, 109.2) umfasst, wobei

- der Stromrichter insbesondere ein Traktionsumrichter (104.5 bis 104.8) oder ein Bordnetzumrichter (109.1, 109.2) ist.

4. Energieversorgungseinrichtung nach einem der vorhergehenden Ansprüche, **dadurch gekennzeichnet, dass**

- der vorgebbare Grenzwert ein variabler Grenzwert ist, der insbesondere in Abhängigkeit von externen Einflüssen variiert, und/oder

- der vorgebbare Grenzwert ein Amplitudengrenzwert ist.

5. Energieversorgungseinrichtung nach einem der vorhergehenden Ansprüche, **dadurch gekennzeichnet, dass** die Steuereinrichtung (110) mit den Stromrichtereinheiten (104.1 bis 104.4, 109.1, 109.2) und/oder den Erfassungseinrichtungen (104.5 bis 104.8, 109.1, 109.2) über wenigstens ein Datenbussystem (113) verbunden ist.

6. Energieversorgungseinrichtung nach einem der vorhergehenden Ansprüche, **dadurch gekennzeichnet, dass** die vorgebbare Zeitspanne 0,1 s bis 2 s beträgt.

**7.** Energieversorgungseinrichtung nach einem der vorhergehenden Ansprüche, **dadurch gekennzeichnet, dass**

- die Steuereinrichtung (110) dazu ausgebildet ist, eine in dem wenigstens einen Deaktivierungsschritt (112.4) deaktivierte Stromrichtereinheit (104.1 bis 104.4, 109.1, 109.2) nach einer weiteren vorgebbaren Zeitspanne in einem Reaktivierungsschritt (112.8) zu reaktivieren, wobei
- die Steuereinrichtung (110) insbesondere dazu ausgebildet ist, für eine Stromrichtereinheit nach einer erneuten Deaktivierung der Stromrichtereinheit (104.1 bis 104.4, 109.1, 109.2) eine vorgebbare Anzahl von maximal N weiteren Reaktivierungsschritten vorzunehmen, wobei N insbesondere 1 bis 5 beträgt.

**8.** Energieversorgungseinrichtung nach einem der vorhergehenden Ansprüche, **dadurch gekennzeichnet, dass**

- wenigstens eine Erfassungseinrichtung (111.1 bis 111.6) eine Sensoreinrichtung zur Messung eines für den Störstrom der zugeordneten Stromrichtereinheit (104.1 bis 104.4, 109.1, 109.2) repräsentativen Messwerts ist und/oder
- wenigstens eine Erfassungseinrichtung (111.1 bis 111.6) ein Modell zur Ermittlung eines für den Störstrom der zugeordneten Stromrichtereinheit (104.1 bis 104.4, 109.1, 109.2) repräsentativen Werts aus wenigstens einer Zustandsgröße der Stromrichtereinheit (104.1 bis 104.4, 109.1, 109.2) umfasst.

**9.** Fahrzeug, insbesondere Schienenfahrzeug, mit einer Energieversorgungseinrichtung (102) nach einem der vorhergehenden Ansprüche.

**10.** Verfahren zur Steuerung einer Energieversorgungseinrichtung, insbesondere einer Energieversorgungseinrichtung für ein Fahrzeug, mit einer Mehrzahl von Stromrichtereinheiten (104.1 bis 104.4, 109.1, 109.2), bei dem

- für jede Stromrichtereinheit (104.1 bis 104.4, 109.1, 109.2) Erfassungswerte erfasst werden, die für die von der Stromrichtereinheit (104.1 bis 104.4, 109.1, 109.2) erzeugten Störströme repräsentativ sind, und
- wenigstens eine der Stromrichtereinheiten (104.1 bis 104.4, 109.1, 109.2) zur Reduktion der von der Energieversorgungseinrichtung (102) erzeugten Störströme selektiv deaktiviert wird,

**dadurch gekennzeichnet, dass**

- in einem Vergleichsschritt (112.2, 112.3) aus den Erfassungswerten ein für die Summe der Störströme der Stromrichtereinheiten (104.1 bis 104.4, 109.1, 109.2) repräsentativer Summenwert gebildet und mit einem vorgebbaren Grenzwert verglichen wird und
- bei Überschreitung des Grenzwerts über einen vorgebbaren Zeitraum in wenigstens einem Deaktivierungsschritt (112.4) nur so viele der Stromrichtereinheiten (104.1 bis 104.4, 109.1, 109.2) deaktiviert werden, wie zur Unterschreitung des Grenzwerts um einen vorgebbaren Unterschreitungsbetrag erforderlich ist, wobei
- der Unterschreitungsbetrag 0% bis 50% des Grenzwertes, vorzugsweise 20% bis 30% des Grenzwertes, beträgt, und
- die Bestimmung der in dem Deaktivierungsschritt (112.4) zu deaktivierenden Stromrichtereinheiten (104.1 bis 104.4, 109.1, 109.2) in Abhängigkeit von einer Funktion des Fahrzeugs erfolgt, die in der aktuellen Betriebssituation des Fahrzeugs mit Priorität zu realisieren ist.

**11.** Verfahren nach Anspruch 10, **dadurch gekennzeichnet, dass** in dem wenigstens einen Deaktivierungsschritt (112.4)

- unter Verwendung der Erfassungswerte der Erfassungseinrichtungen (111.1 bis 111.6) und wenigstens eines vorgebbaren Entscheidungskriteriums eine zu deaktivierende Stromrichtereinheit (104.1 bis 104.4, 109.1, 109.2) bestimmt wird und
- die zu deaktivierende Stromrichtereinheit (104.1 bis 104.4, 109.1, 109.2) deaktiviert wird, wobei
- in dem wenigstens einen Deaktivierungsschritt (112.4) insbesondere zumindest die Stromrichtereinheit (104.1 bis 104.4, 109.1, 109.2) mit dem höchsten Störstrom deaktiviert wird

und/oder

- insbesondere der Vergleichsschritt (112.2, 112.3) und der Deaktivierungsschritt (112.4) wiederholt wird.

**12.** Verfahren nach einem der Ansprüche 10 bis 11, **dadurch gekennzeichnet, dass**

- die Stromrichtereinheit (104.1 bis 104.4, 109.1, 109.2) zumindest einen Stromrichter (104.5 bis 104.8, 109.1, 109.2) umfasst, wobei
- der Stromrichter insbesondere ein Traktionsumrichter (104.5 bis 104.8) oder ein Bordnetzumrichter (109.1, 109.2) ist.

**13.** Verfahren nach einem der Ansprüche 10 bis 12, **dadurch gekennzeichnet, dass**

- der vorgebbare Grenzwert ein variabler Grenzwert ist, der insbesondere in Abhängigkeit von externen Einflüssen variiert wird,

und/oder

- der vorgebbare Grenzwert ein Amplitudengrenzwert ist,

und/oder

- die vorgebbare Zeitspanne 0,1 s bis 2 s beträgt.

**14.** Verfahren nach einem der Ansprüche 10 bis 13, **dadurch gekennzeichnet, dass**

- eine in dem wenigstens einen Deaktivierungsschritt (112.4) deaktivierte Stromrichtereinheit (104.1 bis 104.4, 109.1, 109.2) nach einer weiteren vorgebbaren Zeitspanne in einem Reaktivierungsschritt (112.8) reaktiviert wird, wobei
- für eine Stromrichtereinheit (104.1 bis 104.4, 109.1, 109.2) nach einer erneuten Deaktivierung der Stromrichtereinheit (104.1 bis 104.4, 109.1, 109.2) insbesondere eine vorgebbare Anzahl von maximal N weiteren Reaktivierungsschritten vorgenommen wird, wobei N insbesondere 1 bis 5 beträgt.

**15.** Verfahren nach einem der Ansprüche 10 bis 14, **dadurch gekennzeichnet, dass**

- wenigstens ein für den Störstrom einer Stromrichtereinheit (104.1 bis 104.4, 109.1, 109.2) repräsentativer Messwert gemessen wird

und/oder

- ein für den Störstrom einer Stromrichtereinheit (104.1 bis 104.4, 109.1, 109.2) repräsentativer Wert über ein Modell der Stromrichtereinheit (104.1 bis 104.4, 109.1, 109.2) aus wenigstens einer Zustandsgröße der Stromrichtereinheit (104.1 bis 104.4, 109.1, 109.2) berechnet wird.

**Claims**

**1.** Power supply device for a vehicle, in particular a rail vehicle, with

- a plurality of converter units (104.1 to 104.4, 109.1, 109.2)
- a plurality of detection devices (111.1 to 111.6)
- and a control unit (110),
- at least one of the detection devices (up 111.6 111.1) is assigned to each converter unit (104.1 to 104.4, 109.1, 109.2),
- the detection device (111.1 to 111.6) is adapted to detect a detection value of at least one state variable, which is representative of the interference currents generated by the converter unit (104.1 to 104.4, 109.1, 109.2), and
- the control unit (18) is adapted for selectively disabling the power converter units (104.1 to 104.4, 109.1, 109.2), and
- the control unit (110) is connected with the power converter units (104.1 to 104.4, 109.1, 109.2) and the detection devices (111.1 to 111.6)

characterized that

- the control unit (110) is adapted to form, in a comparison step (112.2, 112.3), a sum value from the detection values of the detecting devices (111.1 to 111.6), the sum value being representative of the sum of the interference currents of the converter units (104.1 to 144.4, 109.1, 109.2), and to compare this sum value with a predeterminable threshold value, and

- the control device (110) is adapted to deactivate, in case the threshold value is exceeded over a specified period of time, in at least a deactivation step (112.4), only as many of the converter units (104.1 to 104.4, 109.1, 109.2) as required to fall below the threshold value by a predetermined shortfall amount is, wherein

- the shortfall amount ranges from 0% to 50% of the threshold value, preferably 20% to 30% of the threshold value, and

- the determination of the converter units (104.1 to 104.4, 109.1, 109.2) to be deactivated in the deactivation step (112.4) is effected as a function of a function of the vehicle to be realized with priority in the current state of operation of the vehicle.

2. Power supply device according to claim 1, **characterized in that** the control device (110) is adapted to, in the at least one deactivation step (112.4),

- determine a converter unit (104.1 to 104.4, 109.1, 109.2) to be deactivated using the detection values of the detection devices (111.1 to 111.6) and at least one predeterminable decision criterion, and
- to deactivate the converter unit (104.1 to 104.4, 109.1, 109.2) to be deactivated, wherein
- the control unit (110) is in particular adapted to

- deactivate, in the at least one deactivation step (112.4), at least the converter unit (104.1 to 104.4, 109.1, 109.2) with the highest interference current,
and/or
- repeat the comparison step (112.2, 112.3) and the deactivation step (112.4).

3. Power supply device according to any one of the preceding claims, **characterized in that**

- the converter unit (104.1 to 104.4, 109.1, 109.2) comprises at least one converter (104.5 to 104.8, 109.1, 109.2), wherein
- the converter in particular is a traction converter (104.5 to 104.8) or a on-board network converters (109.1, 109.2).

4. Power supply device according to any one of the preceding claims, **characterized in that**

- the predeterminable threshold value is a variable threshold value, which varies, in particular, as a function of external influences,
and/or
- the predefinable threshold value is an amplitude threshold.

5. Power supply device according to any one of the preceding claims, **characterized in that** the control unit (110) is connected to the converter units (104.1 to 104.4, 109.1, 109.2) and/or the detection devices (104.5 to 104.8, 109.1, 109.2) via at least one data bus (113).

6. Power supply device according to any one of the preceding claims, **characterized in that** the predeterminable period of time ranges from 0.1 s to 2 s.

7. Power supply device according to any one of the preceding claims, characterized that

- the control unit (110) is adapted to reactivate, in a reactivation step (112.8), a power converter unit (104.1 to 104.4, 109.1, 109.2) deactivated in said at least one deactivation step (112.4) after a further predeterminable period of time, wherein
- the control unit (110) is in particular adapted to execute, for a converter unit (104.1 to 104.4, 109.1, 109.2), after a further deactivation of the converter unit, a predeterminable maximum number N further reactivation steps, wherein N is preferably 1 to 5.

8. Power supply device according to any one of the preceding claims, **characterized in that**

- at least one detection device (111.1 to 111.6) is a sensor device for measuring a measurement value representative of the interference current for the associated power converter unit (104.1 to 104.4, 109.1, 109.2) and/or
- at least one detection device (111.1 to 111.6) comprises a model for determining a value representative of the interference current of the associated converter unit (104.1 to 104.4, 109.1, 109.2) from at least one state variable of the converter unit (104.1 to 104.4, 109.1, 109.2).

9. Vehicle, in particular rail vehicle, comprising a power supply device (102) according to any one of the preceding claims.

10. A method for controlling a power supply device, in particular a power supply device for a vehicle, having a plurality of converter units (104.1 to 104.4, 109.1, 109.2), in which

- for each converter unit (104.1 to 104.4, 109.1, 109.2) detection values representative for the interference current generated by the converter unit (104.1 to 104.4, 109.1, 109.2) are detected, and
- at least one of the converter units (104.1 to 104.4, 109.1, 109.2) is selectively deactivated for reducing the interference currents generated by the power supply device (102),

characterized that

- in a comparison step (112.2, 112.3), a sum value is formed from the detection values, the sum value being representative of the sum of the interference currents of the converter units (104.1 to 104.4, 109.1, 109.2), and this sum value is compared with a predeterminable threshold value, and
- in case the threshold value is exceeded over a specified period of time, in at least a deactivation step (112.4), only as many of the converter units (104.1 to 104.4, 109.1, 109.2) as required to fall below the threshold value by a predetermined shortfall amount are deactivated, wherein
- the shortfall amount ranges from 0% to 50% of the threshold value, preferably 20% to 30% of the threshold value, and
- the determination of the converter units (104.1 to 104.4, 109.1, 109.2) to be deactivated in the deactivation step (112.4) is effected as a function of a function of the vehicle to be realized with priority in the current state of operation of the vehicle.

11. Method according to claim 10, **characterized in that**, in the at least one deactivation step (112.4)

- a converter unit (104.1 to 104.4, 109.1, 109.2) to be deactivated is determined using the detection values of the detection devices (111.1 to 111.6) and at least one predeterminable decision criterion, and
- the converter unit (104.1 to 104.4, 109.1, 109.2) to be deactivated is deactivated, wherein

  - in the at least one deactivation step (112.4), at least the converter unit (104.1 to 104.4, 109.1, 109.2) with the highest interference current is deactivated,
  and/or
  - the comparison step (112.2, 112.3) and the deactivation step (112.4) is repeated.

12. Method according to any one of claims 10 to 11, **characterized in that**

- the converter unit (104.1 to 104.4, 109.1, 109.2) comprises at least one converter (104.5 to 104.8, 109.1, 109.2), wherein
- the converter in particular is a traction converter (104.5 to 104.8) or a on-board network converters (109.1, 109.2).

13. Method according to any one of claims 10 to 12, **characterized in that**

- the predeterminable threshold value is a variable threshold value, which varies, in particular, as a function of external influences,
and/or
- the predefinable threshold value is an amplitude threshold. and/or
- the predeterminable period of time ranges from 0.1 s to 2 s.

14. Method according to any one of claims 10 to 13, characterized that

- in a reactivation step (112.8), a power converter unit (104.1 to 104.4, 109.1, 109.2) deactivated in said at least one deactivation step (112.4) is reactivate after a further predeterminable period of time, wherein
- in particular, for a converter unit (104.1 to 104.4, 109.1, 109.2), after a further deactivation of the converter unit, a predeterminable maximum number N further reactivation steps, wherein N is preferably 1 to 5.

**15.** Method according to any one of claims 10 to 14, **characterized in that**

- at least one measurement value representative of the interference current for the associated power converter unit (104.1 to 104.4, 109.1, 109.2) is measured
and/or
- a model is used for determining a value representative of the interference current of the associated converter unit (104.1 to 104.4, 109.1, 109.2) from at least one state variable of the converter unit (104.1 to 104.4, 109.1, 109.2).

**Revendications**

**1.** Dispositif d'alimentation d'énergie pour un véhicule, en particulier un véhicule sur rails, avec

- une pluralité d'unités de convertisseur (104.1 à 104.4, 109.1, 109.2),
- une pluralité de dispositifs de détection (111.1 à 111.6),
- et une unité de commande (110), dans lequel
- au moins l'un des dispositifs de détection (111.6 à 111.1) est associé à chaque unité de convertisseur (104.1 à 104.4, 109.1, 109.2), ,
- le dispositif de détection (111.1 à 111.6) est adapté à détecter une valeur de détection d'au moins une variable d'état, qui est représentatif des courants d'interférence générés par l'unité de convertisseur (104.1 à 104.4, 109.1, 109.2), et
- l'unité de commande (18) est adaptée à désactiver de manière sélective les unités de convertisseur (104.1 à 104.4, 109.1, 109.2), et
- l'unité de commande (110) est reliée aux unités de convertisseur (104.1 à 104.4, 109.1, 109.2) et aux dispositifs de détection (111.1 à 111.6)

**caractérisé en ce que**

- l'unité de commande (110) est adaptée à former, dans une étape de comparaison (112.2, 112.3), une valeur de somme à partir des valeurs de détection des dispositifs de détection (111.1à111.6), la valeur de somme représentant la somme des courants d'interférence des unités de convertisseur (104.1 à 104.4, 109.1, 109.2) et à comparer cette valeur de somme à une valeur de limite prédéterminable, et
- l'unité de commande (110) est adaptée à désactiver, en cas de dépassement de la valeur limite pendant une période de temps prédéterminable, dans au moins une étape de désactivation (112.4), qu'autant d'unités de convertisseur (104.1 à 104.4, 109.1, 109.2) que nécessaire pour tomber en dessous de la valeur de limite par un montant d'infériorité prédéterminable, dans lequel
- le montant d'infériorité est de 0% à 50% de la valeur de limite, de préférence de 20% à 30% de la valeur de limite, et
- la détermination des unités de convertisseur (104.1 à 104.4, 109.1, 109.2) à désactiver dans l'étape de désactivation (112.4) est effectuée en fonction d'une fonction du véhicule à réaliser avec priorité dans l'état d'opération du véhicule actuel.

**2.** Dispositif d'alimentation d'énergie selon la revendication 1, **caractérisé en ce que** l'unité de commande (110) est adaptée à, dans l'au moins une étape de désactivation (112.4),

- déterminer une unité de convertisseur (104.1 à 104.4, 109.1, 109.2) à désactiver en utilisant les valeurs de détection des dispositifs de détection (111.1 à 111.6) et au moins un critère de décision prédéterminable, et
- désactiver l'unité de convertisseur (104.1 à 104.4, 109.1, 109.2) à désactiver, dans lequel
- l'unité de commande (110) est en particulier adapté à

    - désactiver, dans l'au moins une étape de désactivation (112.4), au moins l'unité de convertisseur (104.1 à 104.4, 109.1, 109.2) avec le courant d'interférence le plus élevé,

et/ou

- répéter l'étape de comparaison (112.2, 112.3) et l'étape de désactivation (112.4).

3. Dispositif d'alimentation d'énergie selon l'une quelconque des revendications précédentes, **caractérisé en ce que**

- l'unité de convertisseur (104.1 à 104.4, 109.1, 109.2) comprend au moins un convertisseur (104.5 à 104.8, 109.1, 109.2), dans lequel
- le convertisseur en particulier est un convertisseur de traction (104.5 à 104.8) ou un convertisseur de réseau de bord (109.1, 109.2).

4. Dispositif d'alimentation d'énergie selon l'une quelconque des revendications précédentes, **caractérisé en ce que**

- la valeur limite prédéterminable est une valeur de limite variable qui varie en particulier en fonction d'influences extérieures,
et/ou
- la valeur de limite prédéterminable est une limite d'amplitude.

5. Dispositif d'alimentation d'énergie selon l'une quelconque des revendications précédentes, **caractérisé en ce que** l'unité de commande (110) est connectée avec les unités de convertisseur (104.1 à 104.4, 109.1, 109.2) et/ou les dispositifs de détection (104.5 à 104.8, 109.1, 109.2) par au moins un bus de données (113).

6. Dispositif d'alimentation d'énergie selon l'une quelconque des revendications précédentes, **caractérisé en ce que** la période de temps prédéterminable est de 0,1 à 2 s.

7. Dispositif d'alimentation d'énergie selon l'une quelconque des revendications précédentes, **caractérisé en ce que**

- l'unité de commande (110) est adapté pour réactiver, dans une étape de réactivation (112.8), après une période de temps supplémentaire prédéterminable, une unité de convertisseur (104.1 à 104.4, 109.1, 109.2) désactivée dans ladite au moins une étape de désactivation (112.4), dans lequel
- l'unité de commande (110) est en particulier adapté pour exécuter, pour une unité de convertisseur (104.1 à 104.4, 109,1, 109.2), après une autre désactivation de l'unité de convertisseur, un nombre maximal prédéterminable de N nouvelles étapes de réactivation, où N est de préférence de 1 à 5.

8. Dispositif d'alimentation d'énergie selon l'une quelconque des revendications précédentes, **caractérisé en ce que**

- au moins un dispositif de détection (111.1 à 111.6) est un dispositif de capteur pour mesurer une valeur de mesure représentant le courant d'interférence de l'unité de convertisseur associé (104.1 à 104.4, 109.1, 109.2), et/ou
- au moins un dispositif de détection (de 111.1 à 111.6) comprend un modèle pour déterminer une valeur représentative pour le courant d'interférence de l'unité de convertisseur associé (104.1 à 104.4, 109.1, 109.2) à partir d'au moins une variable d'état de l'unité de convertisseur (de 104.1 à 104.4, 109.1, 109.2).

9. Véhicule, en particulier véhicule ferroviaire, comprenant un dispositif d'alimentation d'énergie (102) selon l'une quelconque des revendications précédentes.

10. Procédé de commande d'un dispositif d'alimentation d'énergie, en particulier d'un dispositif d'alimentation d'énergie pour un véhicule, avec une pluralité d'unités de convertisseur (104.1 à 104.4, 109.1, 109.2), dans lequel

- une valeur de détection est détectée pour chaque unité de convertisseur (104.1 à 104.4, 109.1, 109.2), qui est représentative des courants d'interférence générés par l'unité de convertisseur (104.1 à 104.4, 109.1, 109.2), et
- au moins une des unités de convertisseur (104.1 à 104.4, 109.1, 109.2) est sélectivement désactivée pour réduire les courants d'interférence générés

**caractérisé en ce que**

- dans une étape de comparaison (112.2, 112.3), une valeur de somme est formée à partir des valeurs de détection, la valeur de somme représentant la somme des courants d'interférence des unités de convertisseur (104.1 à 104.4, 109.1, 109.2) et cette valeur de somme est comparée à une valeur de limite prédéterminable, et
- en cas de dépassement de la valeur limite pendant une période de temps prédéterminable, dans au moins une étape de désactivation (112.4), qu'autant d'unités de convertisseur (104.1 à 104.4, 109.1, 109.2) que nécessaire pour tomber en dessous de la valeur de limite par un montant d'infériorité prédéterminable sont désactivées, dans lequel
- le montant d'infériorité est de 0% à 50% de la valeur de limite, de préférence de 20% à 30% de la valeur de limite, et
- la détermination des unités de convertisseur (104.1 à 104.4, 109.1, 109.2) à désactiver dans l'étape de désactivation (112.4) est effectuée en fonction d'une fonction du véhicule à réaliser avec priorité dans l'état d'opération du véhicule actuel.

**11.** Procédé selon la revendication 10, **caractérisé en ce que**, dans l'au moins une étape de désactivation (112.4),

- une unité de convertisseur (104.1 à 104.4, 109.1, 109.2) à désactiver est déterminée en utilisant les valeurs de détection des dispositifs de détection (111.1 à 111.6) et au moins un critère de décision prédéterminable, et
- l'unité de convertisseur (104.1 à 104.4, 109.1, 109.2) à désactiver est désactivée, dans lequel
- en prticulier, dans l'au moins une étape de désactivation (112.4), au moins l'unité de convertisseur (104.1 à 104.4, 109.1, 109.2) avec le courant d'interférence le plus élevé est désactivée, et/ou
- l'étape de comparaison (112.2, 112.3) et l'étape de désactivation (112.4) est répétée.

**12.** Procédé selon l'une quelconque des revendications 10 à 11, **caractérisé en ce que**

- l'unité de convertisseur (104.1 à 104.4, 109.1, 109.2) comprend au moins un convertisseur (104.5 à 104.8, 109.1, 109.2), dans lequel le convertisseur en particulier est un convertisseur de traction (104.5 à 104.8) ou un convertisseur de réseau de bord (109.1, 109.2).

**13.** Procédé selon l'une quelconque des revendications 10 à 12, **caractérisé en ce que**

- la valeur limite prédéterminable est une valeur de limite variable qui varie en particulier en fonction d'influences extérieures,
et/ou
- la valeur de limite prédéterminable est une limite d'amplitude. et/ou
- la période de temps prédéterminable est de 0,1 s à 2 s.

**14.** Procédé selon l'une quelconque des revendications 10 à 13, **caractérisé en ce que**

- dans une étape de réactivation (112.8), après une période de temps supplémentaire prédéterminable, une unité de convertisseur (104.1 à 104.4, 109.1, 109.2) désactivée dans ladite au moins une étape de désactivation (112.4) est réactivée, dans lequel
- en particulier, pour une unité de convertisseur (104.1 à 104.4, 109.1, 109.2), après une autre désactivation de l'unité de convertisseur, un nombre maximal prédéterminable de N nouvelles étapes de réactivation est exécutée, où N est de préférence de 1 à 5.

**15.** Procédé selon l'une quelconque des revendications 10 à 14, **caractérisé en ce que**

- au moins une valeur de mesure est mesurée représentant le courant d'interférence de l'unité de convertisseur associé (104.1 à 104.4, 109.1, 109.2),
et/ou
- au moins un modèle est utilisé pour déterminer une valeur représentative pour le courant d'interférence de l'unité de convertisseur associé (104.1 à 104.4, 109.1, 109.2) à partir d'au moins une variable d'état de l'unité de convertisseur (de 104.1 à 104.4, 109.1, 109.2).

Fig. 1

17

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005045603 A1